# EUROPEAN PATENT APPLICATION

(11) **EP 3 537 392 A1**
(43) Date of publication of application: **11.09.2019**
(21) Application number: 19160506.2
(22) Date of filing: 04.03.2019
(51) Int. Cl.: G07G 1/00

(54) **SALES REGISTRATION APPARATUS**

(30) Priority: 05.03.2018 JP 2018038915
(71) Applicant: Toshiba Tec Kabushiki Kaisha, 141-8562 Tokyo (JP)
(72) Inventor: Yajima, Shinsuke, Tokyo, 141-8562 (JP)
(74) Representative: Hoffmann Eitle

(57) **Abstract**

A sales registration apparatus includes a scanner to read information from a commodity, a main body section to be disposed on an upper surface of a checkout counter and housing the scanner, a display mount attached to an upper end of the main body section; and an arm section attached to a side surface of the main body section and including a shelf surface extending in a plane parallel to the upper surface of the checkout counter. In some examples a peripheral device can be disposed on the shelf surface. In certain examples, the scanner is a bar code scanner.

## Description

### CROSS-REFERENCE TO RELATED APPLICATION

This application is based upon and claims the benefit of priority from Japanese Patent Application No. 2018-038915, filed in March 5, 2018, the entire contents of which are incorporated herein by reference.

### FIELD

Embodiments described herein relate generally to a sales registration apparatus.

### BACKGROUND

A checkout system of a known type includes a sales registration apparatus that performs registration of items in a sales transaction and an accounting apparatus that executes settlement processing on the basis of registration data from the sales registration apparatus connected thereto over a network. In such a checkout system, a configuration in which store clerks divide labor of registration and settlement (a two-person work type) and a configuration in which a customer performs settlement (a semi-self-service type) can be adopted.

In such a checkout system, a sales registration apparatus of a type referred to as vertical scanner is often used for space saving and the like. In such a sales registration apparatus, there is a configuration in which a reading device and the like are housed in a main body section disposed on a checkout counter and a display device is provided above the main body section. In this sales registration apparatus, a peripheral device such as a card reader that reads information from a card type medium is sometimes used. Since such a peripheral device is often separate from (not integrated with) the sales registration apparatus, the peripheral device may be placed in a position adjacent to the sales registration apparatus on the checkout counter, for example.

However, when the peripheral device is placed on the checkout counter, a usable region of the checkout counter is reduced. Therefore, it is likely that convenience is reduced. For example, a shopping basket may not be easily placed on the checkout counter near the sales registration apparatus due to the presence of the peripheral device. It is also possible to place the peripheral device on a shelf or the like provided below the checkout counter surface. However, then it may be hard to operate the peripheral device because an operator may need to crouch to use the peripheral device.

There has also been proposed a configuration in which a holding section for hanging and storing a hand scanner is provided on a side surface of a vertical scanner. However, this holding section in the prior art has been unable to hold a heavier stationary peripheral device and a design problem is presented that is not easily solved.

### SUMMARY OF THE INVENTION

One of the objects of the present invention is to improve prior art techniques and overcome at least some of the prior art problems as for instance above illustrated.

In a first aspect of the invention, it is provided a sales registration apparatus, comprising a scanner to read information from a commodity; a main body section to be disposed on an upper surface of a checkout counter and configured to house the scanner; a display mount attached to an upper end of the main body section; and an arm section attached to a side surface of the main body section and including a shelf surface extending in a plane parallel to the upper surface of the checkout counter.

Optionally, in the sales registration apparatus according to the first aspect of the invention, the side surface of the main body section includes a plurality of attachment portions therein to which the arm section can be detachably attached, the plurality of attachment portions being positioned in the side surface to be at different heights from the upper surface of the checkout counter.

Optionally, in the sales registration apparatus according to the first aspect of the invention, the arm section includes a first section including the shelf surface and a second section connected to the first section and at a substantially right angle to the shelf surface, and the second section is attached to the side surface of the main body section.

Optionally, in the sales registration apparatus according to the first aspect of the invention, the first section includes a first through-hole in the shelf surface.

Optionally, in the sales registration apparatus according to the first aspect of the invention, the second section includes a second through-hole therein and the side surface of the main body section includes a third through-hole therein positioned to correspond in position to the second through-hole when the arm section is attached to the side surface of the main body section.

Optionally, the sales registration apparatus according to the first aspect of the invention further comprises a peripheral device disposed on the shelf surface; and a cable connected to the peripheral device and passing through the first, second, and third through-holes.

Optionally, in the sales registration apparatus according to the first aspect of the invention, the second section includes a first through-hole therein and the side surface of the main body section includes a second through-hole therein positioned to correspond in position to the first through-hole when the arm section is attached to the side surface of the main body section.

Optionally, the sales registration apparatus according to the first aspect of the invention further comprises a peripheral device disposed on the shelf surface; and a cable connected to the peripheral device and passing through the first and second through-holes.

Optionally, in the sales registration apparatus according to the first aspect of the invention, the arm section comprises metal.

Optionally, in the sales registration apparatus according to the first aspect of the invention, the arm section is attached to the main body section with screws.

According to a second aspect of the invention, it is provided a vertical scanner apparatus, comprising a scanner to read information from a commodity; a main body to be mounted on a checkout counter and housing the scanner adjacent to a reading window on a front surface side of the main body; a display mount attached to an upper end of the main body; a display mounted to the display mount; an operation panel adjacent to the display; and an arm section attached to a side surface of the main body and including a shelf surface extending in a plane parallel to an upper surface of the checkout counter.

Optionally, in the vertical scanner apparatus according to the second aspect of the invention, the side surface of the main body includes a plurality of attachment portions therein to which the arm section can be detachably attached, the plurality of attachment portions being positioned in the side surface to be at different heights from the upper surface of the checkout counter.

Optionally, in the vertical scanner apparatus according to the second aspect of the invention, the scanner is a bar code scanner.

Optionally, in the vertical scanner apparatus according to the second aspect of the invention, the arm section includes a first section including the shelf surface and a second section connected to the first section and at a substantially right angle to the shelf surface, and the second section is attached to the side surface of the main body.

Optionally, in the vertical scanner apparatus according to the second aspect of the invention, the first section includes a first through-hole in the shelf surface, the second section includes a second through-hole therein, and the side surface of the main body section includes a third through-hole therein positioned to correspond in position to the second through-hole when the arm section is attached to the side surface of the main body.

Optionally, the vertical scanner apparatus according to the second aspect of the invention further comprises a peripheral device disposed on the shelf surface; and a cable connected to the peripheral device and passing through the first, second, and third through-holes.

According to a third aspect of the invention, it is provided a checkout apparatus, comprising: a checkout counter; a main body to be mounted on a checkout counter; a scanner to read information from a commodity, the scanner being housed in the main body adjacent to a reading window on a front surface side of the main body; a display mount attached to an upper end of the main body; a display mounted to the display mount; an operation panel adjacent to the display; and an arm section attached to a side surface of the main body and including a shelf surface extending in a plane parallel to an upper surface of the checkout counter.

Optionally, in the checkout apparatus according to the third aspect of the invention, the side surface of the main body includes a plurality of attachment portions therein to which the arm section can be detachably attached, the plurality of attachment portions being positioned in the side surface to be at different heights from the upper surface of the checkout counter.

Optionally, in the checkout apparatus according to the third aspect of the invention, the arm section comprises metal, and the arm section is attached to the main body with screws.

Optionally, the checkout apparatus according to the third aspect of the invention further comprises a peripheral device disposed on the shelf surface; and a cable connected to the peripheral device, wherein the arm section includes a first section including the shelf surface and a second section connected to the first section and at a substantially right angle to the shelf surface, the second section is attached to the side surface of the main body section, the first section includes a first through-hole in the shelf surface, the second section includes a second through-hole therein the side surface of the main body includes a third through-hole therein positioned to correspond in position to the second through-hole when the arm section is attached to the side surface of the main body, and the cable passes through the first, second, and third through-holes.

### DESCRIPTION OF THE DRAWINGS

FIG. 1 is a perspective view illustrating a checkout system according to an embodiment.
FIG. 2 is a view of a sales registration apparatus from a front side.
FIG. 3 is a view of a sales registration apparatus from a back side.
FIG. 4 is a perspective view illustrating aa configuration of a housing.
FIG. 5 depicts a housing viewed from a front side.
FIG. 6 is a cross sectional view of a housing taken at a position A1 illustrated in FIG. 4.
FIG. 7 is a perspective view illustrating an arm section according to an embodiment.
FIG. 8 is a view of an arm section illustrated in FIG. 7 viewed from a B1 direction.
FIG. 9 is a view of an arm section illustrated in FIG. 7 viewed from a B2 direction.
FIG. 10 depicts an arm section attached to a supporting section.
FIG. 11 is a view of an arm section illustrated in FIG. 10 viewed from a C1 direction.
FIG. 12 is a cross sectional view of a supporting section and an arm section taken at a position C2 illustrated in FIG. 11.
FIG. 13 depicts another configuration of a sales registration apparatus according to an embodiment.
FIG. 14 depicting yet another configuration of a sales registration apparatus according to an embodiment.

### DETAILED DESCRIPTION

According to one embodiment, a sales registration apparatus includes a scanner to read information from a commodity and a main body section to be disposed on an upper surface of a checkout counter and configured to house the scanner. A display mount is attached to an upper end of the main body section. An arm section is attached to a side surface of the main body section and includes a shelf surface extending in a plane parallel to the upper surface of the checkout counter.

A sales registration apparatus according to example embodiments is explained in detail below with reference to the accompanying drawings. In the examples explained below, a sales registration apparatus used in checkout systems of a two-person work type or a semi-self-service type is explained. However, the present disclosure is not limited to these example embodiments.

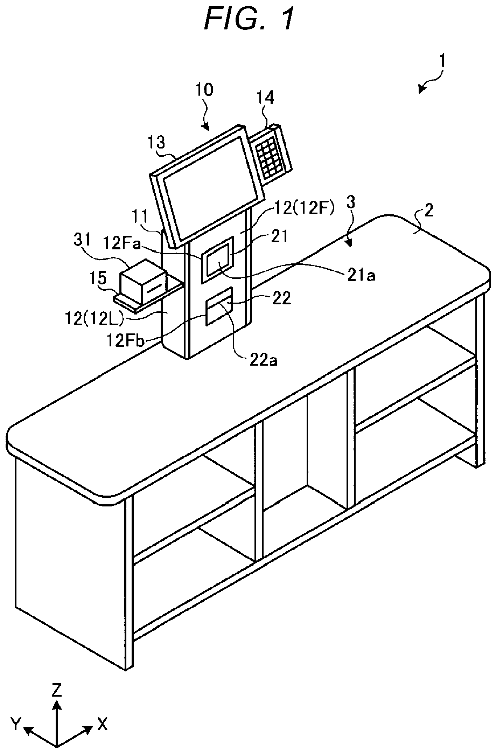

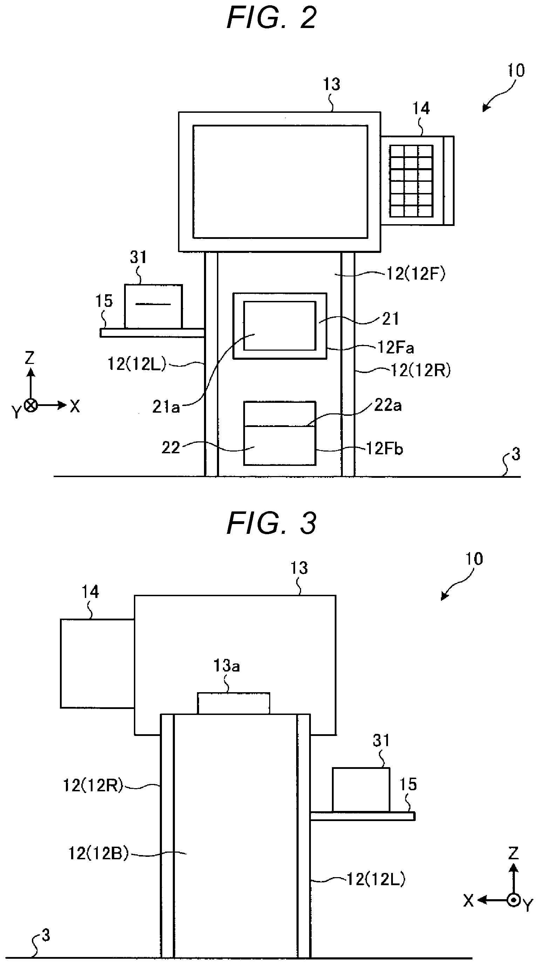

FIG. 1 is a perspective view illustrating an example of a checkout system 1 according to an embodiment. FIG. 2 is a view of a sales registration apparatus 10 illustrated in FIG. 1 viewed from the front side (an operator side). FIG. 3 is a view of the sales registration apparatus 10 illustrated in FIG. 1 viewed from the back side (a customer side) .

The checkout system 1 includes a checkout counter 2 having a laterally long table shape. A flat loading surface 3 is formed on the upper surface of the checkout counter 2. A shopping basket or the like that stores commodities can be placed on the loading surface 3.

The sales registration apparatus 10 is set in a substantially centered along the longitudinal direction of the checkout counter 2. The sales registration apparatus 10 is a vertical-type scanner apparatus, also referred to as a vertical scanner in some contexts. The sales registration apparatus 10 is located on the far side of the loading surface 3 as viewed from an operator side. The sales registration apparatus 10 is communicably connected to an external apparatus such as a settlement terminal.

The sales registration apparatus 10 comprises a housing 11 disposed on the loading surface 3. The housing 11 houses various devices related to the operation of the sales registration apparatus 10. The housing 11 includes, for example, a reading section 21 and a printer section 22 on the inside.

The reading section 21 is a reading device that reads, via a reading window 21a, information concerning a commodity such as a code symbol attached to the commodity and/or a characteristic of the commodity to be registered in a sales transaction. The reading section 21 includes a light that emits reading light from the reading window 21a, an image sensor that receives reflected light, and a decoder that executes decode processing concerning an output signal of the image sensor.

The printer section 22 is a printing device that prints (issues) a print such as a receipt. The printer section 22 includes a paper storing section for storing paper, a conveying section that conveys the paper stored in the paper storing section to a paper discharge port 22a, and a printing section that performs printing on the paper conveyed to the paper discharge port 22a.

Panel sections 12 (including panel sections 12F, 12B, 12L, and 12R) are detachably attached to the surfaces (e.g., the front surface, the back surface, and the left and right side surfaces) of the housing 11. Each panel section 12 is formed of a plate-like member such as resin and covers a surface of the housing 11. In the panel section 12F attached to the front side of the housing 11, opening sections 12Fa and 12Fb are provided such that the front surface of the housing 11 can be covered in a state in which the front surfaces of the reading section 21 and the printer section 22 are exposed.

A display section 13 is attached to an upper part of the housing 11. The display section 13 is a display device including a display such as a liquid crystal display. The display section 13 is provided to extend beyond the front surface of the housing 11 towards the operator side. A front portion of the display section 13 is inclined downward. The display section 13 is used as a display for an operator, such as a store clerk, who operates the sales registration apparatus 10. The display section 13 may have a touch panel configuration. The display section 13 may include a power supply unit for the sales registration apparatus 10 and a control unit for the sales registration apparatus 10 The control unit may comprise a CPU (Central Processing Unit), a ROM (Read Only Memory), and a RAM (Random Access Memory) .

An operation panel 14 is provided adjacent to the display section 13. In an example shown in FIG. 1, the operation panel 14 is provided on the right of the display section 13 when viewed from the operator. The operation panel 14 includes an input device such as a keyboard or keypad.

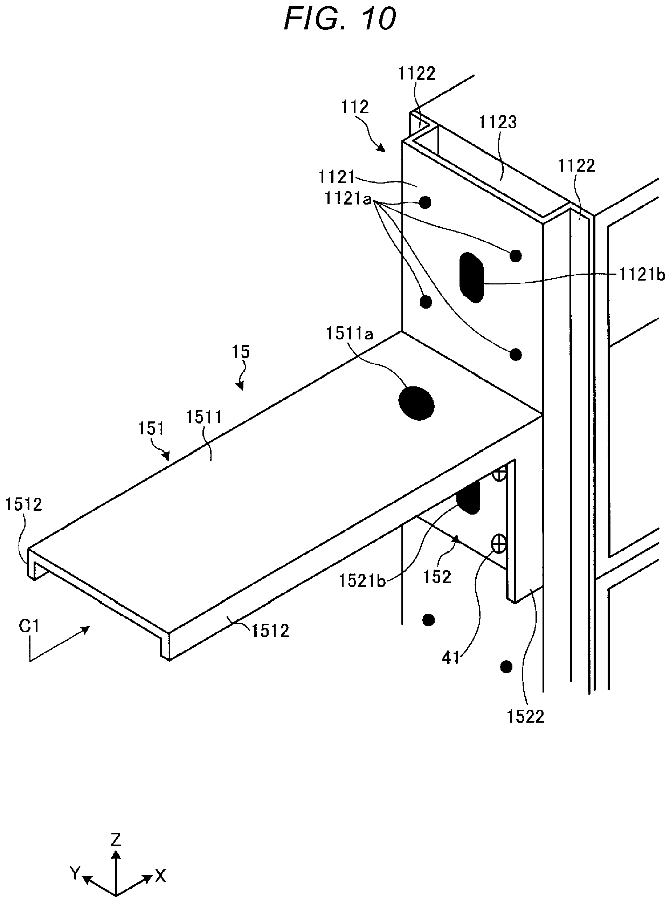

An arm section 15 horizontally extended from the outer side of the housing 11 is attached to a side of the housing 11. The arm section 15 is attached at a position separated from the loading surface 3. The arm section 15 includes, on the upper surface thereof, a placement surface 1511 (see FIG. 10) on which an article can be placed. An article such as a peripheral device 31 of the sales registration apparatus 10 can be placed on the placement surface 1511.

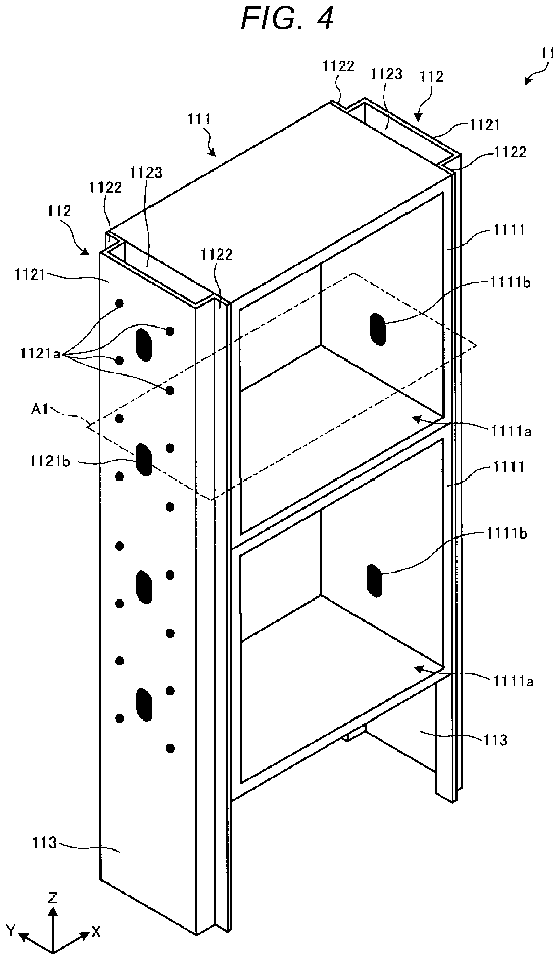

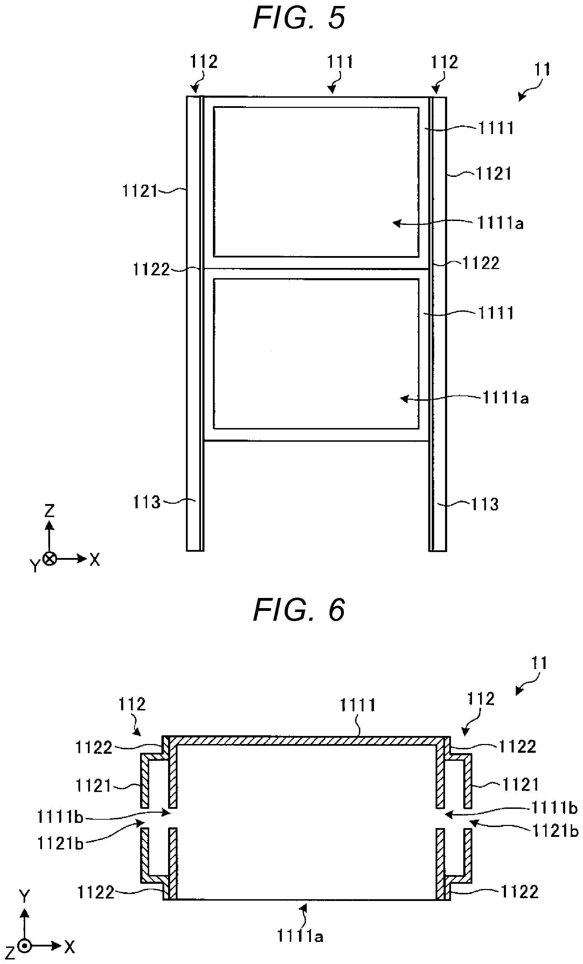

A through-hole into which foot sections 113 (see FIGS. 4 and 5) of the housing 11 are inserted is formed on the loading surface 3. By inserting the foot sections 113 into the through-hole of the loading surface 3, the housing 11 is fixed to the loading surface 3. The height of the sales registration apparatus 10 on the loading surface 3 is desirably set to approximately the eye-level of the operator.

The configuration of the sales registration apparatus 10 is not limited to the example explained above. For example, the sales registration apparatus 10 may also include a display section for a customer (a customer display section), a display screen of which is directed towards the back side of the sales registration apparatus 10. The customer display section can be attached to, for example, the back of the display section 13 or at a position adjacent to the display section 13 (such as a position opposite to the operation panel 14). The customer display section can also be attached using the arm section 15.

A configuration of the sales registration apparatus 10 (in particular the housing 11) is explained with reference to FIGS. 4 to 6. FIG. 4 is a perspective view illustrating an example of the housing 11. FIG. 5 is the housing 11 illustrated in FIG. 4 viewed from the front side. FIG. 6 is a diagram illustrating a cross section taken a position A1 illustrated in FIG. 4. FIGS. 4 to 6 depict, for purposes of explanation, a state in which the panel section 12, the display section 13, the operation panel 14, and the arm section 15 have been removed from the sales registration apparatus 10.

As illustrated in FIGS. 4 to 6, the housing 11 includes a main body section 111 and supporting sections 112. The main body section 111 has a substantially box-like shape long in the height direction (a Z direction) . The main body section 111 is formed by frame sections 1111 stacked in multiple (at least) stages in the height direction.

The frame sections 1111 are formed by, for example, metal plates and have a substantially box-like shape. The frame sections 1111 are stacked in the vertical direction. The stacked frame sections 1111 are integrated (joined) by welding, screwing, or the like to form the main body section 111. In this way, the main body section 111 is configured by a plurality of blocks divided by the frame sections 1111.

The frame sections 1111 include opening sections 1111a on the front side and form spaces (interior housing regions) capable of storing devices such as the reading section 21 and the printer section 22. Devices including interfaces or windows on the front surfaces thereof are housed in the frame sections 1111 such that the interfaces/windows face the front side of the sales registration apparatus 10. For example, the reading section 21 is housed with the reading window 21a directed to the front side (see FIG. 1). The printer section 22 is housed with the paper discharge port 22a directed to the front side (see FIG. 1).

Devices that can be stored in the interior housing regions of the frame sections 1111 are not limited to the reading section 21 and the printer section 22. For example, the frame sections 1111 may house a control unit and a power supply unit of the sales registration apparatus 10. The frame sections 1111 may also house a peripheral device 31 such as a card reader.

The devices housed in the frame sections 1111 may be fixed to the frame sections 1111 or may be insertable/removable from the frame sections 1111. In the latter case, the frame sections 1111 may include slide mechanisms capable of sliding, from the front of the sales registration apparatus 10, the housed devices and a placement surface on which various devices can be placed. Consequently, the operator can easily put electronic devices and the like in the frame sections 1111 and take out the electronic devices and the like housed in the frame sections 1111. For example, if the printer section 22 is housed in a frame section 1111, the operator can access the printer section 22, for example, the to replace paper or the like. By providing a slide mechanism in a frame section 1111, the operator can easily access the printer section 22 by sliding the printer section 22 from the front of the housing 11. Therefore, it is possible to achieve improvement of convenience.

Cable holes 1111b, which are through-holes, are provided on side surfaces of the frame sections 1111. The cable holes 1111b allow cables (e.g., signal lines, electric wires) used for connecting the devices housed in the frame sections 1111 and other devices to pass therethrough.

The sizes of the frame sections 1111 do not particularly matter so long as the intended devices can be housed in the frame sections 1111. In FIGS. 4 and 5, the sizes of the frame sections 1111 are the same but the disclosure is not limited to this. However, since the frame sections 1111 are stacked in the height direction, the sizes of each frame section 1111 in the width direction (an X direction) and the depth direction (a Y direction) are desirably set to be equal for each frame section 111. The sizes in the height direction (a Z direction) of the frame sections 1111 may be the same among the frame sections 1111 or may be different according to the sizes of devices to be housed in the respective frame sections 1111. The number of stacked stages of the frame sections 1111 is not limited to two and may be three or more.

When devices are housed in the frame sections 1111, the panel section 12F is attached to the front side of the main body section 111. Consequently, the opening sections 1111a of the frame sections 1111 are covered by the panel section 12F (see FIGS. 1 and 2). As explained above, the interfaces/windows of the devices housed in the frame sections 1111 are exposed from the opening sections 12Fa and 12Fb provided in the panel section 12F. Consequently, the operator can access the interfaces of the housed devices even in a state in which the panel section 12F is attached.

The supporting sections 112 are attached to both side sides of the main body section 111. The supporting sections 112 are columnar members horseshoe-shaped in cross sections extended over the height direction of the main body section 111. The supporting sections 112 are formed from, for example, a metal plate. The supporting sections 112 support the main body section 111 from both the side surfaces.

Specifically, the supporting sections 112 include side surface sections 1121 having substantially C-shaped in cross section and extended sections 1122 extended from both ends of the side surface sections 1121 toward the outer side. The side surface sections 1121 form side surfaces of the housing 11 (more particularly, the main body section 111) when the supporting sections 112 are attached to the main body section 111. The extended sections 1122 are parts connected to the main body section 111 when the supporting sections 112 are attached to the main body section 111. The width (Y direction) of the supporting sections 112 is substantially equal to the depth (Y direction) of the main body section 111. The height (Z direction) of the supporting sections 112 is greater than the height (Z direction) of the main body section 111.

The supporting sections 112 are fixed or joined to the side surfaces of the main body section 111 by welding, screwing, or the like. Specifically, the extended sections 1122 provided at both ends of the side surface sections 1121 are joined to the side surfaces of the main body section 111 along the height of the main body section 111 while the upper ends of the supporting sections 112 are aligned with the height of the upper surface of the main body section 111. That is, the supporting sections 112 are attached such that recessed sides of C-shaped step surfaces are facing the side surfaces of the main body section 111.

Lower end portions of the supporting sections 112, that is, portions of the supporting sections 112 projecting beyond the lower surface of the main body section 111 are utilized as foot sections 113 of the housing 11. The foot sections 113 are inserted into a through-hole in the loading surface 3. By this method, the supporting sections 112 are fixed to the loading surface 3 (or more broadly the checkout counter 2).

By mating the main body section 111 and the supporting sections 112, gaps 1123, which can be used as wiring paths, are formed along the height direction of the main body section 111 between the side surfaces of the main body section 111 and the side surface sections 1121. The gaps 1123 are connected to the cable holes 1111b on the side surfaces of the main body section 111. Consequently, in the housing 11, wiring between the frame sections 1111 and wiring between different frame sections 1111 and the display section 13 can be performed via the gaps 1123.

Attachment sections 1121a to which an arm section 15 can be attached are provided on the side surface section 1121 of the supporting section 112. The attachment sections 1121a are, for example, screw holes. A plurality of attachment sections 1121a are provided distributed along the height direction of the supporting section 112. In FIG. 4, an example is illustrated in which four screw holes in the side surface section 1121 are formed as one attachment section 1121a surrounding each guide hole 1211b. In this way, on each side surface section 1121, it is possible to adjust a setting height of an arm section 15 by using different attachment sections 1121a along the height direction of the supporting section 112. The attachment sections 1121a are not limited to the screw holes.

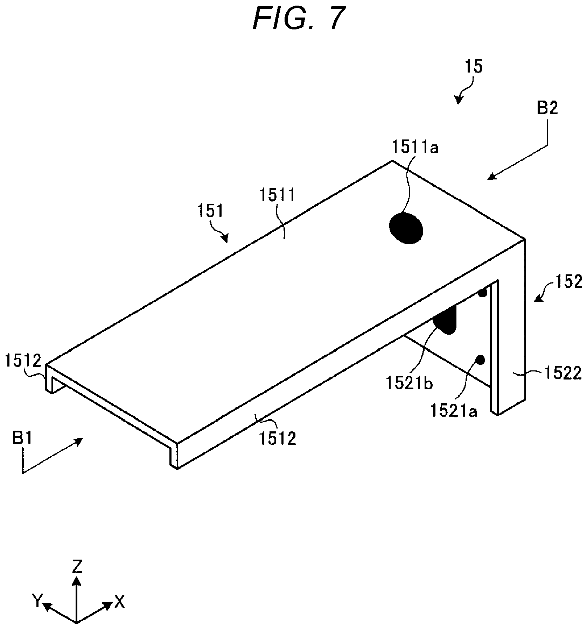

Guide holes 1121b are through-holes provided on the side surface section 1121 of the supporting sections 112. The guide holes 1121b have size for enabling insertion of a finger, a cable, or the like and communicate with the gap 1123. The guide holes 1121b are provided at positions at which an arm section 15 may be attached and are positioned to communicate with cable holes 1521b in a short side section 152 of an arm section 15 (see FIG. 7) . In FIG. 4, an example is illustrated in which the guide hole 1121b is provided in the center of the attachment section 1121a (the four screw holes) . A finger or the like can be inserted into the guide hole 1121b as a wire is drawn through in the gap 1123. Consequently, in the sales registration apparatus 10, wiring can be easily performed via the gap 1123. Therefore, it is possible to achieve efficiency in wiring work.

Further, the cable holes 1111b of the frame section 1111 and the guide holes 1121b of the supporting sections 112 are desirably set in aligned positions as illustrated in FIG. 6. By setting the cable holes 1111b and the guide holes 1121b to be aligned with each other, a cable can be easily inserted from the outside to the inside of the housing 11 and vice versa. Therefore, it is possible to achieve efficiency in wiring work.

The display section 13 is attached to the upper surface of the main body section 111 (see FIGS. 1 to 3). Specifically, the display section 13 is attached to the upper surface of the main body section 111 using a holder 13a (see FIG. 3) including a tilt mechanism.

In this way, the sales registration apparatus 10 has a configuration in which the main body section 111 is supported from both the side surfaces by the supporting sections 112. Therefore, it is possible to improve rigidity (strength) of the main body section 111. Consequently, shaking, wobbling, and the like can be prevented in the sales registration apparatus 10. Therefore, it is possible to stably hold the display section 13, the operation panel 14, and the like attached to an upper part of the main body section 111. Further, it is possible to achieve a thinner the sales registration apparatus 10 through improvements in the rigidity (strength) of the main body section 111. Therefore, it is possible to secure a wider available area on the loading surface 3.

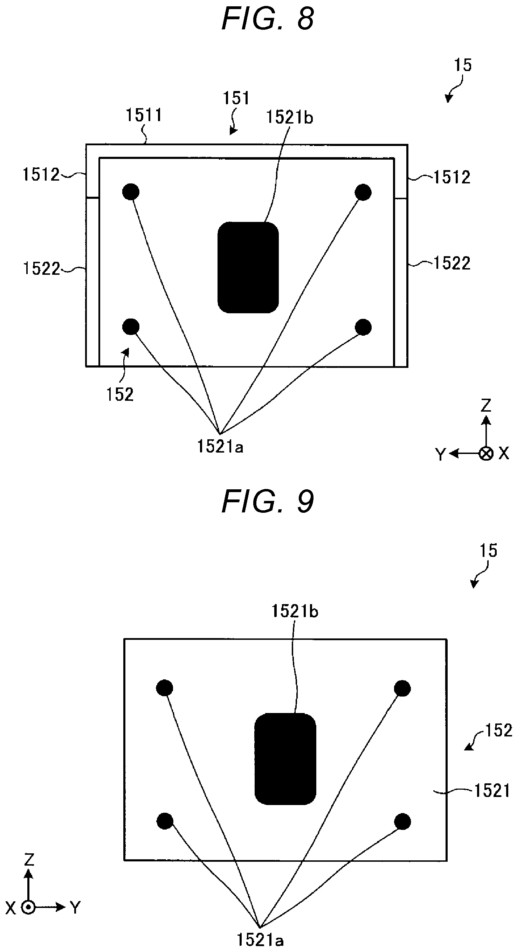

FIG. 7 is a perspective view illustrating an example of an arm section 15. FIG. 8 is a view of the arm section 15 illustrated in FIG. 7 viewed from a B1 direction. FIG. 9 is a view of the arm section 15 illustrated in FIG. 7 viewed from a B2 direction.

The arm section 15 is formed of, for example, metal such as aluminum or stainless steel. The arm section 15 has a substantially L shape as a whole. Specifically, the arm section 15 has a long side section 151 including the placement surface 1511 and a short side section 152 connected to the long side section 151 and disposed at a substantially right angle toward the rear surface side of the placement surface 1511.

The long side section 151 is an example of a first side section. The long side section 151 includes the flat placement surface 1511 on which a peripheral device 31 can be placed. Edge sections 1512 are formed on both side of the long side section 151 as reinforcing members. The edge sections 1512 are formed by, for example, folding back edge portions of the long side section 151 at a right angle toward the rear surface side of the placement surface 1511.

The short side section 152 is an example of a second side section. The short side section 152 includes a joining surface 1521 which can be joined to the side surface section 1211 when the arm section 15 is attached to the supporting section 112. The width of the joining surface 1521 is substantially equal to the width of the side surface section 1121. As in the long side section 151, edge sections 1522 functioning as reinforcing members are formed on both sides of the short side section 152. The edge sections 1522 are formed by folding back edge portions of the short side section 152 at a right angle toward the rear surface side of the joining surface 1521. The width (Y direction) of the placement surface 1511 and the edge sections 1521 is substantially equal to the width of the side surface section 1121.

The edge sections 1512 and the edge sections 1522 are provided on the long side section 151 and the short side section 152, respectively. The edge sections 1512 and the edge sections 1522 are joined by welding or the like where the edge sections 1512 and the edge sections 1522 overlap. Thusly, substantially L-shaped reinforcing members (each comprising one edge section 1512 and one edge section 1552 joined together) corresponding to the shape of the arm section 15 are formed on side surfaces of the arm section 15. Consequently, a cross section of the arm section 15 has a substantially C shape.

A cable hole 1511a is provided on the placement surface 1511 of the long side section 151 (see FIG. 7) . The cable hole 1511a is used in leading out a cable of a peripheral device placed on the placement surface 1511 to below the placement surface 1511 or drawing of the cable to above the placement surface 1511.

Attachment sections 1521a for attaching the joining surface 1521 to the side surface section 1121 are provided in the short side section 152 (more specifically on the joining surface 1521) . The attachment sections 1521a are, for example, screw holes and are provided in positions corresponding to the attachment sections 1121a of the side surface section 1121. In FIGS. 7 to 9, an example is illustrated in which four screw holes provided in the short side section 152 are utilized as attachment sections 1521a. A disposition interval of the screw holes of the short side section 152 corresponds to a disposition interval of the screw holes in the attachment section 1121a.

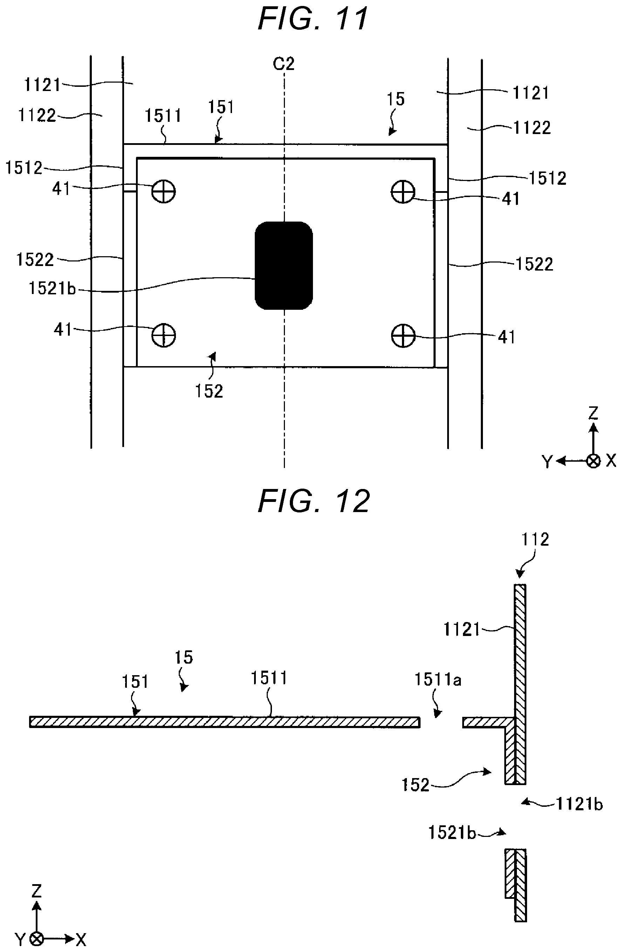

The cable hole 1521b is provided in the short side section 152 (more specifically the joining surface 1521) (see FIG. 7) . The cable hole 1521b is located in a position aligned with the guide hole 1121b of the supporting section 112 when the arm section 15 is attached to the supporting section 112 (see FIG. 12).

A method of attaching the arm section 15 to the supporting section 112 is explained with reference to FIGS. 10 to 12. FIG. 10 is a perspective view illustrating a state in which the arm section 15 has been attached to the supporting section 112. FIG. 11 is a view of the arm section 15 illustrated in FIG. 10 as viewed from a C1 direction. FIG. 12 is a diagram illustrating a cross section of the supporting section 112 and the arm section 15 taken at a position C2 illustrated in FIG. 11.

As illustrated in FIGS. 10 to 12, the arm section 15 is attached to the supporting section 112 with the placement surface 1511 of the long side section 151 directed upward. Specifically, the joining surface 1521 of the short side section 152 faces the side surface section 1121 of the supporting section 112 with the placement surface 1511 of the long side section 151 being directed upward. Fasteners 41, such as fixing screws or bolts (and nuts), are inserted through the attachment sections 1521a and the attachment sections 1121a and screwed in or the like, whereby the arm section 15 is attached to the supporting section 112.

The arm section 15 provides rigidity against a load in the gravity direction. Consequently, a heavy object such as the peripheral device 31 can be placed on the placement surface 1511 of the arm section 15. Further, the arm section 15 is reinforced by reinforcing members such as the edge sections 1512 and the edge sections 1522. Consequently, the rigidity and strength of the arm section 25 are high. Therefore, the arm section 15 can stably hold a peripheral device 31 placed on the placement surface 1511.

In the arm section 15 attached to the supporting section 112, the cable hole 1521b is disposed to be aligned to the guide hole 1121b (see FIG. 12). Consequently, the operator can access the gap 1123 via the cable hole 1521b. Therefore, for example, a cable drawn out to the rear surface side of the placement surface 1511 from the cable hole 1511a can be easily inserted into the gap 1123. Therefore, in the sales registration apparatus 10, wiring between the peripheral device 31 (on the placement surface 1511) and another device in the housing 11 can be easily performed. Therefore, it is possible to achieve efficiency in wiring work.

The length (X direction) and width (Y direction) of the arm 15 do not particularly matter. However, it is typically desirable to set the length and width within a range permitting the peripheral device 31 placed on the placement surface 1511 to be stably held. For example, a ratio of the length of the long side section 151 to length of the short side section 152 may be designed to be 3:1. In general, the lengths of the long side section 151 and the short side section 152 may be determined according to the intended weight and dimensions of the peripheral device to be placed on the placement surface 1511. For example, the thickness of a metal plate used in forming the arm section 15 does not particularly matter and may be set to, for example, 2 mm or greater, as necessary. In some examples, the widths of the edge sections 1512 and the edge sections 1522 may be the same or may be different.

The height position for the attachment of the arm section 15 to the supporting section 112 does not particularly matter. However, it is preferable that the arm section 15 is attached to a position that is higher than a shopping basket height such that a shopping basket can fit between the loading surface 3 and the arm section 15. In this manner, the shopping basket can be placed closer to the sales registration apparatus 10, which is also generally closer to the operator who operates the sales registration apparatus 10. Therefore, it is possible to achieve efficiency of work related to loading and unloading of a shopping basket in sales registration processing.

After the arm section 15 is attached to the supporting section 112, the panel sections 12L and 12R are attached to the side surface sections 1121 of the supporting section 112 (see FIG. 1). The panel sections 12L and 12R cover the side surface sections 1121 to close the attachment sections 1121a in regions where the arm section 15 has not been provided as well as the guide holes 1121b. The selected method of attaching the panel sections 12L and 12R to the supporting sections 112 does not particularly matter. For example, the panel sections 12L and 12R may be attached using the attachment sections 1121a provided in the supporting sections 112 and the guide holes 1121b.

As explained above, the sales registration apparatus 10 includes, on the side surface of the housing 11, an arm section 15 including a placement surface 1511 extending in the horizontal direction. Consequently, a peripheral device 31 can be on the placement surface 1511 and held in a state in which the peripheral device 31 is separated from the loading surface 3. Since the peripheral device 31 is not placed on the loading surface 3, a wider area of the loading surface 3 can be secured in the sales registration apparatus 10 for use by the customer or the sales clerk. By placing the peripheral device 31 on the placement surface 1511, the peripheral device 31 can still be disposed near the sales registration apparatus 10. Consequently, the operator can still easily access the peripheral device 31. Therefore, it is possible to improve convenience related to use of the peripheral device 31.

For example, the front side of the frame sections 1111 is open in the above example. However, the back side of the frame sections 1111 may also or instead be open. With such a configuration, a device including an interface/window to be operated/accessed by the customer can be housed in the frame section 1111. Consequently, the customer can also operate a device housed in the frame section 1111. In the panel section 12B attached to the back side of the housing 11, an opening for exposing an interface/window of a housed device can be provided in a manner similar to the panel section 12F.

In the embodiment, an example is explained in which a plurality of frame sections 1111 are stacked in multiple stages to form the main body section 111. However, the main body section 111 is not limited to this. For example, one or a plurality of shelf plates may be provided on the inside of a frame section 1111. In such a case, the main body section 111 (more particularly a frame section 1111) may include a cable hole 1111b for each of divided spaces created by inclusion of the shelf plates in the main body section 111.

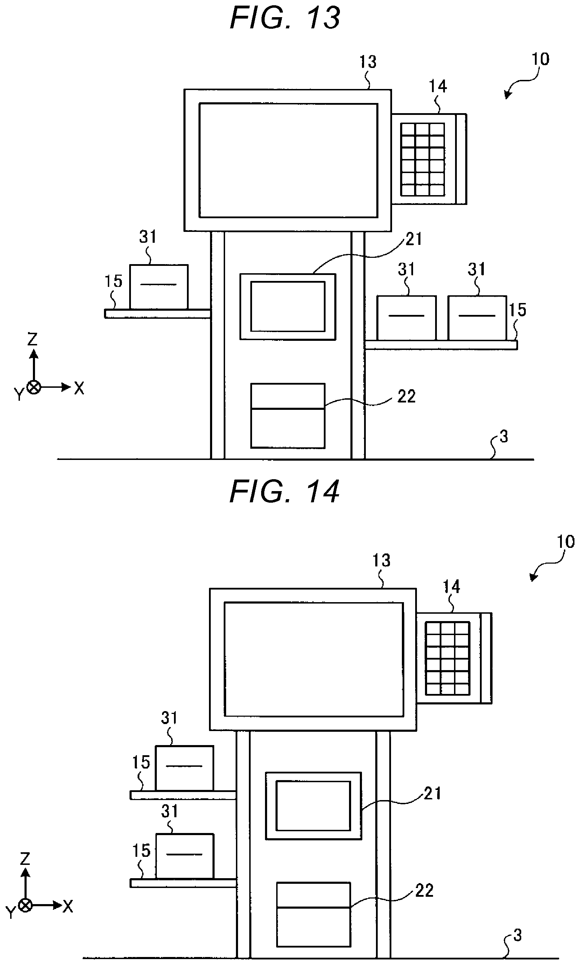

In the embodiment, the example is explained in which a single arm section 15 is attached to only one side surface of the housing 11 (see FIGS. 1 to 3) . However, the present disclosure is not limited to this. For example, as illustrated in FIG. 13, one arm section 15 may be attached to each of the side surfaces of the housing 11. FIG. 13 is a diagram illustrating another example of the sales registration apparatus 10. In FIG. 13, an example is illustrated in which arm sections 15 are attached to both the side surfaces of the housing 11. In FIG. 13, the lengths of the arm sections 15 are different on different side surfaces of the housing 11. However, the lengths may be the same in some examples.

As illustrated in FIG. 14, a plurality of arm sections 15 may be attached to one side surface of the housing 11. In FIG. 14, an example is illustrated in which two arm sections 15 are attached to one side surface of the housing 11. Likewise, by combination of the examples in FIG. 13 and FIG. 14, a plurality of arm sections 15 may be attached to both side surfaces of the housing 11. FIG. 14 is a diagram illustrating another example of the sales registration apparatus 10.

The cross-sectional shape of the supporting sections 112 is not limited to the shape in the example embodiment. The cross-sectional shape may be other shapes permitting formation of gaps 1123 (or the equivalent) between the supporting sections 112 and the main body section 111. For example, the supporting sections 112 may be a tubular member such as a square pipe having a hollow region on the inside. In general, cross-sectional shape of the supporting sections 112 does not particularly matter. However, the supporting sections 112 require a shape to which the main body section 111 and the arm section 15 can be attached. The supporting sections 112 include, in positions opposed to the cable holes 1111b on the surface side attached to the main body section 111, through-holes communicating with the cable holes 1111b. The supporting sections 112 include the attachment sections 1121a and the guide holes 1121b on the surface sides forming the side surfaces of the housing 11. Consequently, in some examples, the gaps 1123 (or equivalent) can be formed between the supporting sections 112 and the main body section 111 by inclusion of hollow or recessed regions in the supporting sections 112.

In the example embodiment, a peripheral device 31 is directly placed on the placement surface 1511 of the arm section 15. However, in other examples, a shelf plate or the like may be attached to the placement surface 1511 of the arm section 15 and the peripheral device 31 may be placed on the attached shelf plate. In such a case, by attaching a shelf plate larger than the placement surface 1511, it is possible to increase a an area on which the peripheral device 31 can be placed.

While certain embodiments have been described, these embodiments have been presented by way of example only, and are not intended to limit the scope of the present disclosure. Indeed, the novel embodiments described herein may be embodied in a variety of other forms; furthermore, various omissions, substitutions, and changes in the form of the embodiments described herein may be made without departing from the scope of the present invention as defined by the appended claims. The accompanying claims and their equivalents are intended to cover such forms or modifications as would fall within the scope of the present invention as defined by the appended claims.

## Claims

1. A sales registration apparatus, comprising:
a scanner to read information from a commodity;
a main body section to be disposed on an upper surface of a checkout counter and configured to house the scanner;
a display mount attached to an upper end of the main body section; and
an arm section attached to a side surface of the main body section and including a shelf surface extending in a plane parallel to the upper surface of the checkout counter.

2. The sales registration apparatus according to claim 1, wherein the side surface of the main body section includes a plurality of attachment portions therein to which the arm section can be detachably attached, the plurality of attachment portions being positioned in the side surface to be at different heights from the upper surface of the checkout counter.

3. The sales registration apparatus according to claim 1 or 2, wherein
the arm section includes a first section including the shelf surface and a second section connected to the first section and at a substantially right angle to the shelf surface, and
the second section is attached to the side surface of the main body section.

4. The sales registration apparatus according to claim 3, wherein the first section includes a first through-hole in the shelf surface.

5. The sales registration apparatus according to claim 4, wherein
the second section includes a second through-hole therein and
the side surface of the main body section includes a third through-hole therein positioned to correspond in position to the second through-hole when the arm section is attached to the side surface of the main body section.

6. The sales registration apparatus according to claim 5, further comprising:
a peripheral device disposed on the shelf surface; and
a cable connected to the peripheral device and passing through the first, second, and third through-holes.

7. The sales registration apparatus according to claim 3, wherein
the second section includes a first through-hole therein and
the side surface of the main body section includes a second through-hole therein positioned to correspond in position to the first through-hole when the arm section is attached to the side surface of the main body section, preferably comprising:
a peripheral device disposed on the shelf surface; and
a cable connected to the peripheral device and passing through the first and second through-holes.

8. The sales registration apparatus according to any of claims 1 to 7, wherein the arm section comprises metal.

9. The sales registration apparatus according to any of claims 1 to 8, wherein the arm section is attached to the main body section with screws.

10. A vertical scanner apparatus, comprising:
a scanner to read information from a commodity;
a main body to be mounted on a checkout counter and housing the scanner adjacent to a reading window on a front surface side of the main body;
a display mount attached to an upper end of the main body;
a display mounted to the display mount;
an operation panel adjacent to the display; and
an arm section attached to a side surface of the main body and including a shelf surface extending in a plane parallel to an upper surface of the checkout counter.

11. The vertical scanner apparatus according to claim 10, wherein the side surface of the main body includes a plurality of attachment portions therein to which the arm section can be detachably attached, the plurality of attachment portions being positioned in the side surface to be at different heights from the upper surface of the checkout counter.

12. The vertical scanner apparatus according to claim 11 or 12, wherein the scanner is a bar code scanner.

13. The vertical scanner apparatus according to any of claims 10 to 12, wherein
the arm section includes a first section including the shelf surface and a second section connected to the first section and at a substantially right angle to the shelf surface, and
the second section is attached to the side surface of the main body,
wherein preferably
the first section includes a first through-hole in the shelf surface,
the second section includes a second through-hole therein, and
the side surface of the main body section includes a third through-hole therein positioned to correspond in position to the second through-hole when the arm section is attached to the side surface of the main body,
the apparatus further preferably comprising:
a peripheral device disposed on the shelf surface; and
a cable connected to the peripheral device and
passing through the first, second, and third through-holes.

14. A checkout apparatus, comprising:
a checkout counter;
a main body to be mounted on a checkout counter;
a scanner to read information from a commodity, the scanner being housed in the main body adjacent to a reading window on a front surface side of the main body;
a display mount attached to an upper end of the main body;
a display mounted to the display mount;
an operation panel adjacent to the display; and
an arm section attached to a side surface of the main body and including a shelf surface extending in a plane parallel to an upper surface of the checkout counter.

15. The checkout apparatus according to claim 14, wherein
the arm section comprises metal, and
the arm section is attached to the main body with screws.
